# EUROPEAN PATENT APPLICATION

(11) **EP 1 321 399 A1**
(43) Date of publication of application: **25.06.2003**
(21) Application number: 02257044.4
(22) Date of filing: 10.10.2002
(51) Int. Cl.: B65G 69/18, B65B 31/02

(54) **Material transfer apparatus**

(30) Priority: 02.11.2001 GB 0126358; 04.01.2002 GB 0200140; 30.01.2002 GB 0202127; 30.01.2002 GB 0202074; 17.05.2002 GB 0211309
(71) Applicant: Extract Technology Limited, Huddersfield HD2 1UR (GB)
(72) Inventor: Ryder, Martyn, Sowerby Bridge HX6 4RG (GB)
(74) Representative: Stuttard, Garry Philip

(57) **Abstract**

The present invention relates to a material transfer apparatus incorporating a material handling enclosure for assisting the transfer of material (*eg* powdered material such as powdered pharmaceutical materials) between a material storage means and a material receiving means and an axially compressible tubular sleeve for localised containment of extraneous material at the interface of the material handling enclosure and the material receiving means and/or at the interface of the material handling enclosure and the material storage means, and to the material handling enclosure and to the axially compressible tubular sleeve *per se*.

## Description

The present invention relates to a material transfer apparatus incorporating a material handling enclosure for assisting the transfer of material (*eg* powdered material such as powdered pharmaceutical materials) between a material storage means and a material receiving means and an axially compressible tubular sleeve for localised containment of extraneous material at the interface of the material handling enclosure and the material receiving means and/or at the interface of the material handling enclosure and the material storage means, and to the material handling enclosure and to the axially compressible tubular sleeve *per se.*

It is known that transferring materials such as solids, powders and other dry substances into a process vessel (such as a reactor vessel) or a processing machine (such as a mill or blender) can create extensive dust clouds. Fine powders are capable of being suspended in the working environment from where there is a risk that they may be inhaled by operators with potentially disastrous consequences. Thus in handling and transferring dangerous (*eg* potentially toxic) powdered materials, it is imperative that a safe breathing zone is provided for the operator which falls within currently acceptable levels of exposure.

In the field of material transfer technology, it is known to transfer material between a material storage means (*eg* a powder bin) and a material receiving means (*eg* a reaction vessel) using various devices. Current operating parameters and acceptable operator exposure levels impose certain performance requirements on such devices, in particular to provide a safe and contained working environment at and in the vicinity of the interface of the material storage means and the material receiving means. To meet these requirements, a number of sophisticated valve-operated devices have been developed and specific examples are disclosed in GB-A-2362151 (Extract Technology Limited). However these devices are relatively costly and restrict operator intervention in the transfer process.

For transferring very hazardous materials, a range of barrier isolators may be used. A barrier isolator may offer two-fold protection, namely the use of gloves to maintain a physical barrier between the operator and material and an exhaust system for removing airborne particles. One conventional material transfer apparatus from Powder Systems Limited comprises an isolator with gloved access to a contained enclosure for dispensation of potent compounds into bottles. The potent compounds contained in drums are transferred from a powder drum using a rigid transfer coupling secured at one end to a port in the isolator and which at the other end freely passes over the exterior of the powder drum. Being non-efficiently disposable, the rigid transfer coupling is used repeatedly and represents a potential source of cross-contamination.

In a conventional material transfer apparatus from CTT Ltd, a drum mounted on a drum manipulator is pneumatically lowered towards the ventilated hood of a reaction vessel to which is attached a local exhaust means and empty liner collection bag. The operator places the end of the drum liner into the opening of the hood keeping the outlet of the drum liner below the exhaust means. The contents of the drum liner are delivered into the reaction vessel and the drum liner is shaken to complete transfer. The drum liner is manually rolled up and passed into the empty liner collection bag. This material transfer apparatus does not offer acceptable operator exposure levels at the interface of the hood and drum.

The present invention relates to a transfer method and to a material transfer apparatus which for the majority of low to medium risk situations offers the only cost effective containment alternative to airflow containment in the working environment. In particular, the present invention seeks to overcome the impracticality of complete containment of the working environment in and around a material transfer apparatus by incorporating a material handling enclosure for the operator to maintain facile transfer and a low cost device for effective localised containment at the interface of the material handling enclosure and a material receiving means and/or at the interface of the material handling enclosure and a material storage means.

Thus viewed from one aspect the present invention provides a material transfer apparatus for the transfer of material between a material storage means and a material receiving means, said material transfer apparatus comprising:
a material handling enclosure positionable in a transfer position so as to enclose a material handling zone beyond an access wall thereof, said access wall being adapted or adaptable to permit an operator outside the material handling zone to reach into the material handling zone, said material handling enclosure having a discharge outlet and an entrance; and either or both of
a first axially compressible tubular sleeve for localised containment of extraneous material at and in the vicinity of the interface between the material handling enclosure and the material storage means, said first axially compressible tubular sleeve being flexible about a radial axis and having a first end and a second end attachable at or near to the mouth of the entrance of the material handling enclosure to form a substantially dust tight seal; and
a second axially compressible tubular sleeve for localised containment of extraneous material at and in the vicinity of the interface between the material receiving means and the material handling enclosure, said second axially compressible tubular sleeve being flexible about a radial axis and having a first end attachable at or near to the mouth of the discharge outlet of the material handling enclosure to form a substantially dust tight seal and a second end attachable at or near to the mouth of an inlet of the material receiving means to form a substantially dust tight seal.

The material may be chemical, pharmaceutical or biological and is typically a solid such as a powder or other dry substance. It may be transferred within a material container from the material storage means to the material handling enclosure and/or within a material container from the material handling enclosure to the material receiving means. The material container may be a liner, bottle or bag or other readily transferrable material container.

The entrance of the material handling enclosure may be a detachable, releaseable or unfastenable portion *eg* a zipped lid or a pocket. For this embodiment, material transfer from the material storage means into the material handling enclosure may be straightforwardly manual (usually in a material container) without the assistance of the first axially compressible tubular sleeve.

Typically the entrance has a substantially circular mouth *eg* circular, elliptical or oval mouth as desired. However it is not intended to exclude other shapes *(eg* curved, partially curved or non-curved shapes) from the scope of the invention provided that the second end of the first axially compressible tubular sleeve is attachable at or near to the mouth of the entrance in a substantially dust tight manner. For this purpose, there may be a retaining lip at or near to the mouth of the entrance to retain the first axially compressible tubular sleeve. Typically the diameter of the entrance will be sufficient to accommodate an open end of the material storage means.

Preferably the mouth of the entrance is a connection sleeve to which is attached the second end of the first axially compressible tubular sleeve to form a substantially dust tight seal. The connection sleeve may be an elongate member (such as a square pyramidal member or (preferably)an elongate tubular member) such that on an exterior surface thereof may be mounted the second end of the first axially compressible tubular sleeve in a substantially dust tight manner.

The second end of the first axially compressible tubular sleeve may be attached at or near to the mouth of the entrance of the material handling enclosure in any conventional manner. For example, where the connection sleeve is an elongate member, an open end of the first axially compressible tubular sleeve may be exteriorly mounted on the entrance so as to form a substantially dust tight seal. For example, the open end of the first axially compressible tubular sleeve may be elastically, exteriorly mounted on the connection sleeve. Preferably the open end of the first axially compressible tubular sleeve extends into a neck portion, said neck portion being mounted *(eg* elastically mounted) on the connection sleeve so as to form a substantially dust tight seal. Strengthening means may be used to improve the seal *eg* a strengthening ring such as an o-ring.

The perimeter of the entrance may be fitted with means for sealingly attaching the second end of the first axially compressible tubular sleeve. The means for sealingly attaching the second end of the first axially compressible tubular sleeve may be a spigot, preferably a multi-groove spigot. The multi-groove spigot advantageously permits attachment of more than one first axially compressible tubular sleeve thereby rendering sequential material transfer operations *(eg* a batch process) safer. This is described in greater detail hereinafter. The second end of the first axially compressible tubular sleeve may be stretchably attached to a groove of the multi-groove spigot. The second end of the first axially compressible tubular sleeve may comprise a rolled up edge to strengthen the attachment or separate strengthening means may be used *eg* a strengthening ring such as an o-ring.

The discharge outlet may be an elongate member (such as a square pyramidal member or (preferably)an elongate tubular member) such that on an exterior surface thereof may be mounted the first end of the second axially compressible tubular sleeve in a substantially dust tight manner. In a preferred embodiment, the material transfer apparatus further comprises a removable chute substantially concentrically disposed within the discharge outlet. The chute advantageously protects the interior surface of the second axially compressible tubular sleeve from exposure to extraneous dust so that removal and disposal of the second axially compressible tubular sleeve is safer. Typically the chute is cylindrical and may be made of stainless steel.

The first end of the second axially compressible tubular sleeve may be attached at or near to the mouth of the discharge outlet of the material handling enclosure in any conventional manner. For example, where the discharge outlet is an elongate member, an open end of the second axially compressible tubular sleeve may be exteriorly mounted on the discharge outlet so as to form a substantially dust tight seal. For example, the open end of the second axially compressible tubular sleeve may be elastically, exteriorly mounted on the discharge outlet. Preferably the open end of the second axially compressible tubular sleeve extends into a neck portion, said neck portion being mounted (eg elastically mounted) on the discharge outlet so as to form a substantially dust tight seal. Strengthening means may be used to improve the seal eg a strengthening ring such as an o-ring or Jubilee clip.

Typically the discharge outlet has a substantially circular mouth *eg* circular, elliptical or oval mouth as desired. However it is not intended to exclude other shapes (*eg* curved, partially curved or non-curved shapes) from the scope of the invention provided that the first end of the second axially compressible tubular sleeve is attachable at or near to the mouth of the discharge outlet in a substantially dust tight manner. For this purpose, there may be a retaining lip at or near to the mouth of the discharge outlet to retain the second axially compressible tubular sleeve.

The inlet of the material receiving means may be an elongate member *(eg* an elongate tubular member) and the second end of the second axially compressible tubular sleeve may be mounted on an exterior surface thereof. Where each of the inlet and the discharge outlet is an elongate member, the discharge outlet is preferably of a narrower diameter than the inlet so as to be insertable therein. This advantageously minimises exposure of the exterior surface of the inlet to extraneous material. The discharge outlet may be angularly disposed.

The second end of the second axially compressible tubular sleeve may be attached at or near to the mouth of the inlet of the material receiving means in any conventional manner. For example, the mouth of the inlet may be fitted with means for sealingly attaching the second end of the second axially compressible tubular sleeve. The means for sealingly attaching the second end of the second axially compressible tubular sleeve may be a spigot, preferably a multi-groove spigot. Although it may be an integral part of the material receiving means, it is preferred that the means for sealingly attaching the second end of the second axially compressible tubular sleeve is detachable from the inlet. The second end of the second axially compressible tubular sleeve may be stretchably attached to a groove of the multi-groove spigot. The second end of the second axially compressible tubular sleeve may comprise a rolled up edge to strengthen the attachment or separate strengthening means may be used *eg* a strengthening ring such as an o-ring or Jubilee clip.

Typically the inlet has a substantially circular mouth *eg* circular, elliptical or oval mouth as desired. However it is not intended to exclude other shapes *(eg* curved, partially curved or non-curved shapes) from the scope of the invention provided that the second end of the second axially compressible tubular sleeve is attachable at or near to the mouth of the inlet in a substantially dust tight manner.

The first end of the first axially compressible tubular sleeve may be attached to the perimeter of the open end of the material storage means in any conventional manner. Conveniently adhesive tape may be used.

The axially compressible tubular sleeve is preferably axially collapsible. For example, the axially compressible tubular sleeve may be a concertina tube. The axially compressible tubular sleeve is preferably radially compressible *(eg* radially collapsible).

The axially compressible tubular sleeve is generally composed of a low cost material which renders it efficiently disposable. The efficiently disposable axially compressible tubular sleeve may be discarded at the end of each transfer operation (or a batch of transfer operations) thereby substantially eliminating the risk of cross contamination.

The axially compressible tubular sleeve may be composed of substantially transparent material. The axially compressible tubular sleeve may be conveniently composed of a lay flat material. The lay flat material may be cut from a roll to a pre-set length for the appropriate function. The axially compressible tubular sleeve is advantageously substantially non-porous to solid particulates (*eg* powders).

In a preferred embodiment, the axially compressible tubular sleeve is adapted to be inflatable. This advantageously assists the manipulation device to position the material storage means in the transfer position. The axially compressible tubular sleeve may be inflated with air or an inert gas such as nitrogen.

Preferably the axially compressible tubular sleeve is a continuous liner. In a preferred embodiment, at least a part of the continuous liner is gathered *(eg* tucked, folded, wrapped, pleated, plied or rolled) at or near to the mouth of the discharge outlet. For example, where the discharge outlet is an elongate member, the continuous liner may be gathered on the exterior surface thereof. For this purpose, the axially compressible tubular sleeve may be usefully composed of axially compressible, particularly preferably axially collapsible material. In use to permit contained transfer of the material from the material handling means to the material receiving means, a portion of the gathered continuous liner may be drawn off, attached at or near to the mouth of the inlet of the material receiving means in a dust tight manner to allow transfer, closed and disconnected from the discharge outlet. The remaining portion of the continuous liner advantageously remains gathered at or near to the mouth of the discharge outlet for use in subsequent transfer steps and closed to keep the mouth of the discharge outlet contained.

Conventional drums for storage of hazardous material are frequently lined with a liner and the material itself contained within a material container. Where the material storage means is such a conventional drum, the liner may perform the role of the first axially compressible tubular sleeve.

To render the axially compressible tubular sleeve closable and disconnectable from the discharge outlet, the axially compressible tubular sleeve may be adapted to be tied and severed. For this purpose, the axially compressible tubular sleeve may be usefully composed of radially compressible *(eg* radially collapsible) material. The steps of tying and severing may be carried out in any conventional manner *(eg* using a cutting implement such as scissors and ties such as cable ties).

Preferably the material handling enclosure comprises a rigid base which may incorporate the discharge outlet. The rigid base may be adapted to provide a working platform *(eg* for pulverising lumpy solid materials). For example, the rigid base may comprise a substantially flat working platform beneath which is an inwardly tapering cavity *(eg* a chute) tapering into the mouth of the discharge outlet so as to assist the transfer of material into the discharge outlet (and to facilitate wash down). The substantially flat working platform may incorporate a transfer aperture through which material may be transferred to the inwardly tapering cavity. The inwardly tapering cavity may be defined by a frustoconical, truncated pyramidal or substantially pyramidal body portion tapering into the mouth of the discharge outlet. Preferably the rigid base is composed of stainless steel which helps discharge the static charge built up during transfer.

In a preferred embodiment, the rigid base comprises a plurality of exterior feet *(eg* four exterior feet) for standing the material handling enclosure on a floor *(eg* the floor of a containment booth).

The material handling enclosure may comprise an internal support means for interrupting transfer of material in a material container to the material receiving means. The internal support means may be a plurality of bars (or tubes or a mesh), said bars being sufficiently spaced apart to withstand passage of a material container but to facilitate passage of material *(eg* solids such as powders). The internal support means may be mounted at or near to the mouth of the discharge outlet or where there is a transfer aperture across the face thereof.

Preferably the material handling enclosure is a framework structure comprising a plurality of frame parts *(eg* rigid frame parts). Particularly preferably the plurality of frame parts support an envelope *(eg* a bag) of flexible material such as flexible urethane or PVC. For example, the framework structure may comprises two or more rigid frame parts of a substantially U-shape *(eg* square U-shape) fitted to the rigid base in substantially parallel spaced apart relationship and supporting an envelope of flexible material.

Preferably the material handling enclosure is composed of flexible material adapted to be suspended from an external support *(eg* framework). The flexible material may be elasticated to advantageously assist operator manoeuverability in the material handling zone. Preferably the envelope of flexible material is pleated or folded to advantageously assist operator manoeuverability in the material handling zone. Preferably the frame parts include elasticated cords or hangers to further assist manoeuverability and to render parts (or the whole of) the envelope of flexible material collapsible. Thus by tensioning the elasticated cords it may be possible to erect the envelope of flexible material or a part thereof (and similarly by releasing the elasticated cords the envelope of flexible material or a part thereof will collapse).

Preferably the material handling enclosure is composed of rigid material (*eg* to form a rigid walled material handling enclosure).

The material handling enclosure may adopt a substantially cuboidal configuration. For example, the material handling enclosure may have a first side wall and a second side wall connected by a rear wall, a front wall and an upper wall. In one embodiment, the material handling enclosure tapers from the rear to the front wall. The front wall may be the access wall being adapted or adaptable to permit an operator outside the material handling zone to reach into the material handling zone. Alternatively the first and/or second side wall may be access walls being adapted or adaptable to permit an operator outside the material handling zone to reach into the material handling zone. A waste outlet may be incorporated in one wall.

Alternatively the material handling enclosure may adopt a truncated substantially cone-like configuration. For example, the material handling enclosure may have a side wall connected to an upper wall, wherein the side wall is the access wall being adapted or adaptable to permit an operator outside the material handling zone to reach into the material handling zone.

Alternatively the material handling enclosure may adopt an irregular configuration. For example, the material handling enclosure may adopt an irregular configuration having a first side wall and a second side wall being an irregular hexagonal shape. The first side wall and second side wall may be connected by two rear walls, two front walls and an upper wall. The front wall may be the access wall being adapted or adaptable to permit an operator outside the material handling zone to reach into the material handling zone. Alternatively the first and/or second side wall may be access walls being adapted or adaptable to permit an operator outside the material handling zone to reach into the material handling zone. A waste outlet may be incorporated in a rear wall.

Preferably the lower wall of the material handling enclosure tapers into an aperture to the perimeter of which is connected the first end of the second axially compressible tubular sleeve. For example, the lower wall may be frustoconical or a truncated pyramidal shape terminating in an aperture to the perimeter of which is connected the first end of the second axially compressible tubular sleeve.

Preferably the material handling enclosure is a framework structure comprising a plurality of frame parts. Preferably the plurality of frame parts are arranged into a walled framework structure of enclosed walls. The enclosed walls may be composed of flexible or (preferably) non-flexible *(eg* rigid) material supported *(eg* bounded) by a plurality of frame parts. One enclosed wall (typically a rear wall) may comprise a plurality of frame parts bounding rigid material incorporating a waste outlet.

In a preferred embodiment, the access wall comprises one (or more than one) flexible portion in the shape of a glove (or one (or more than one) flexible portion capable of being deformed into the shape of a glove) which permits an operator outside the material handling zone to reach into the material handling zone. Typically the access wall comprises two flexible portions in the shape of a glove (or capable of being deformed into the shape of a glove).

In a preferred embodiment, the (or each) flexible portion in the shape of a glove (or capable of being deformed into the shape of a glove) comprises a flexible sleeve terminating in a gloved end (*eg* a conventional gauntlet). Preferably in use the flexible sleeve extends from the access wall to beyond the operators elbow (to optimise manoeuverability). The gloved end is typically composed of less flexible material than the flexible sleeve to ensure durability. For example, the gloved end may be composed of thicker polyurethane than that of the flexible sleeve (or alternatively of thicker PVC, rubber or other material). The flexible sleeve may be composed of natural or synthetic rubber or polyurethane.

The gloved end may be integral with the flexible sleeve or attached to the flexible sleeve in any conventional manner. Preferably the joint between the gloved end and the flexible sleeve comprises a strengthening portion *(eg* a strengthening ring or a thickened portion of material) to which the ends of the gloved end and the flexible sleeve are secured. For example, the ends of the gloved end and the flexible sleeve may be secured to the internal strengthening ring by an elastic band or the like. The end of the (or each) flexible portion in the shape of a glove *(eg* the flexible sleeve) may comprise a bead or rolled edge for fitting to the access wall. For example, the bead or rolled edge may be stretchably mounted onto a face ring *(eg* a groove of the face ring) on the access wall to produce an airtight joint. The joint may be strengthened by a strengthening ring *(eg* an o-ring) inserted onto a second groove on the face ring.

Typically the size, position and orientation of the (or each) flexible portion in the shape of a glove may be tailored to suit the particular operation conducted in the material handling zone.

The material handling enclosure may be fully or partially transparent. For example, the material handling enclosure may comprise a transparent window at or near to a typical operator's eye height (or other heights as desired) *eg* in the upper wall.

Preferably the material transfer apparatus further comprises:
a manipulation device for positioning the material storage means in a transfer position. The manipulation device may be a rotational tipper or a post hoist type tipper.
Preferably the material transfer apparatus further comprises:
   a positioning device for positioning the material handling enclosure in the transfer position. The positioning device may comprise a stand or support framework for positioning the material handling enclosure in the transfer position or a lift platform. Alternatively the support framework may serve as a fixed base for tensioning elasticated cords and erecting an envelope of flexible material (eg a glove bag).

The material storage means may be a powder bin or keg of a conventional type or any other such storage arrangement. The material receiving means may be a chemical reaction vessel, mixing machine, milling machine, blending machine, weighing machine, sealed packing device, recovery tube, transfer device or part of a sequential multi-process flowline connection.

It is envisaged that the material transfer apparatus of the invention will be used primarily by fine chemical and pharmaceutical product manufacturers. For example, the apparatus could be used in any number of processes including *inter alia* the seeding of chemical reaction vessels during drug manufacture, the formulation of general chemical compounds and addition of catalysts to chemical processes. The apparatus may be used at both manufacturing and research and development stages since the charging of chemical reactors and drug formulation will become a less hazardous step. However, the apparatus will also be of benefit to other manufacturers within the chemical, food and drugs manufacturing industries where potentially toxic materials are transferred (often in very small quantities) to various vessels.

From a further patentable viewpoint, the present invention relates to a low cost axially compressible tubular sleeve for effective localised containment of extraneous material at and in the vicinity of the interface between a material receiving means and a material storage means.

Viewed from a further aspect the present invention provides an axially compressible tubular sleeve as hereinbefore defined.

Preferably the axially compressible tubular sleeve is composed of efficiently disposable material. The efficiently disposable axially compressible tubular sleeve may be discarded at the end of each transfer operation thereby substantially eliminating the risk of cross contamination. Preferably the axially compressible tubular sleeve is adapted to be inflatable.

Whilst advantageously ensuring no direct contact with the material in the material handling zone, the material handling enclosure additionally reduces the exposure of the operator to airborne particulates in the operator breathing zone. At the same time, operator access to the material remains unhindered.

Thus viewed from a yet further aspect the present invention provides a material handling enclosure as hereinbefore defined.

Viewed from a yet still further aspect the present invention provides a method for transferring material to a material receiving means having an inlet, said method comprising:
(A) positioning a material handling enclosure (*eg* a bag such as a glove bag) on or adjacent to the material receiving means in a transfer position so as to enclose a material handling zone beyond an access portion thereof, said access portion being adapted or adaptable to permit an operator outside the material handling zone to reach into the material handling zone, said material handling enclosure having a discharge outlet and a connection sleeve;
(B) connecting a first end of an axially compressible tubular sleeve as hereinbefore defined to the discharge outlet in a substantially dust tight manner;
(C) connecting a second end of the axially compressible tubular sleeve to the inlet in a substantially dust tight manner;
(D) reaching into the material handling zone and accessing the material by manipulating said access portion;
(E) transferring the material from the material handling zone through the discharge outlet into the inlet of the material receiving means;
(F) closing said axially compressible tubular sleeve from the discharge outlet; and
(G) disconnecting said axially compressible tubular sleeve from the discharge outlet.
   In a preferred embodiment of the method of the invention, the material handling enclosure is as hereinbefore defined.
   In a preferred embodiment of the method, the axially compressible tubular sleeve is a continuous liner gathered at or near to the mouth of the discharge outlet and step (C) of the method comprises:
   (C1) drawing off a portion of the continuous liner;
   (C2) connecting the portion of the continuous liner to the inlet in a substantially dust tight manner;
   step (F) of the method comprises:

(F1) closing said portion of the continuous liner from the discharge outlet; step (G) of the method comprises:
(G1) disconnecting said portion of the continuous liner from the discharge outlet.

In a particularly preferred embodiment of the method, step (F1) comprises:
tying off said portion of the continuous liner from the discharge outlet; and step (G1) comprises: severing said portion of the continuous liner from the remainder of the continuous liner gathered at or near to the mouth of the discharge outlet.

The step of tying off may involve single or double tying off. Preferably the method comprises double tying off, wherein step (F1) comprises: tying off said portion of the continuous liner from the discharge outlet with a first tie and a second tie; and step (G1) comprises: severing said portion of the continuous liner between the first tie and the second tie.

Double tying and severing advantageously leaves the free end of the remainder of the continuous liner closed for subsequent operation and the free end of the severed portion of the continuous liner closed on the inlet. Where the material receiving means is a recovery tube, the closed inlet allows the material to be safely transferred in the recovery tube to another processing zone (*eg* an isolator). The first and second tie is typically a cable tie.

Step (A) may include positioning the material handling enclosure on a positioning device such as a support (eg steel) framework. The exterior of the material handling enclosure and the support framework may be rigorously cleaned. Requisite items such as sample bottles, spatulas and liner ties may be introduced into the material handling enclosure beforehand.

In a preferred embodiment of the method, step (B) further comprises:
(B 1) inserting the discharge outlet into the inlet, wherein each of the inlet and discharge outlet is an elongate member and the discharge outlet is of narrower diameter than the inlet.

In a preferred embodiment, step (A) further comprises:
(A1) introducing material into the material handling enclosure.
The material may be introduced in step (A1) in a contained manner. For example, the material may be introduced from a drum using an axially compressible tubular sleeve as hereinbefore defined. Thus step (A1) may comprise:
(A1a) connecting a first end of an axially compressible tubular sleeve as hereinbefore defined to the connection sleeve of the material handling enclosure in a substantially dust tight manner;
(A1b) connecting a second end of the axially compressible tubular sleeve to the drum in a substantially dust tight manner.

In a preferred embodiment of the method, the axially compressible tubular sleeve is a second continuous liner gathered at or near to the mouth of the connection sleeve and step (A1a) of the method comprises:
(A1a1) drawing off a portion of the second continuous liner;
(A1a2) connecting the portion of the second continuous liner to the drum in a substantially dust tight manner; and the method further comprises:
(H) closing said portion of the second continuous liner from the connection sleeve; and
(I) disconnecting said portion of the second continuous liner from the connection sleeve.

In a particularly preferred embodiment of the method, step (H) comprises: tying off said portion of the second continuous liner from the connection sleeve; and step (I) comprises: severing said portion of the second continuous liner from the remainder of the second continuous liner gathered at or near to the mouth of the connection sleeve.

The step of tying off may involve single or double tying off. Preferably the method comprises double tying off, wherein step (H) comprises: tying off said portion of the second continuous liner from the connection sleeve with a first tie and a second tie; and step (I) comprises: severing said portion of the second continuous liner between the first tie and the second tie. Double tying and severing advantageously leaves the free end of the remainder of the second continuous liner closed for subsequent operation and the free end of the severed portion of the second continuous liner closed on the drum.

When the transfer operation is completed, the material handling enclosure is typically collapsed for disposal *(eg* incineration). For this purpose, the method of the invention may further comprise a step in which the tied free end of the continuous liner (on the connection sleeve or discharge outlet) is attached to a vacuum device (such as an approved type H vacuum cleaner). This may be done conventionally (*eg* with adhesive tape). By operating the vacuum device, the material handling enclosure may be collapsed (provided that any elasticated hangers or cords have been released) typically before step (I) or (G1) as appropriate.

The method of the invention may be carried out in a clean or cGMP compliant environment such as a laboratory to further minimise possible contamination. Equally the operator may take precautions such as by wearing a PPE suit.

The present invention will now be described in a non-limitative sense with reference to the accompanying figures in which:
Figure 1 illustrates a first embodiment of the material handling enclosure of the invention;
Figures 2a-h illustrate schematically a transfer operation carried out in an embodiment of the material transfer apparatus of the invention;
Figure 3 illustrates a second embodiment of the material handling enclosure of the invention;
Figure 4 illustrates a third embodiment of the material handling enclosure of the invention;
Figure 5 illustrates a fourth embodiment of the material handling enclosure of the invention;
Figure 6 illustrates a fifth embodiment of the material handling enclosure of the invention; and
Figure 7 illustrates a sixth embodiment of the material handling enclosure of the invention.
Figure 8 illustrates a seventh embodiment of the material handling enclosure of the invention in isolated view;
Figures 9 to 12 illustrate schematically the transfer operation of an embodiment of the material transfer apparatus of the invention;
Figure 13 illustrates (in partial cross-section) the multi-groove spigot of an embodiment of the material handling enclosure of the invention;
Figure 14 illustrates an embodiment of the material transfer apparatus of the invention; and
Figures 15a-f illustrate schematically a transfer operation carried out in an embodiment of the material transfer apparatus of the invention

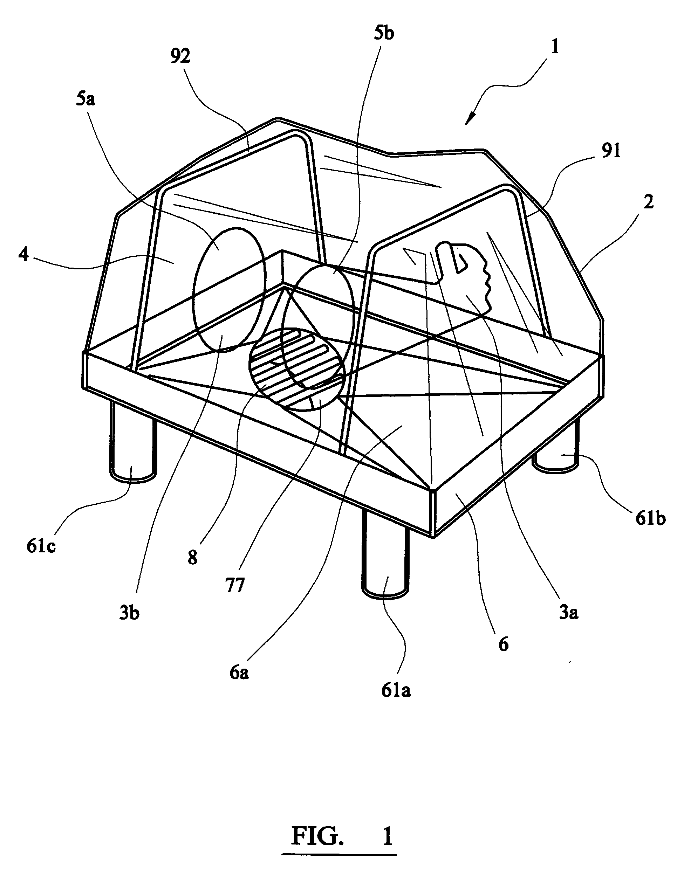

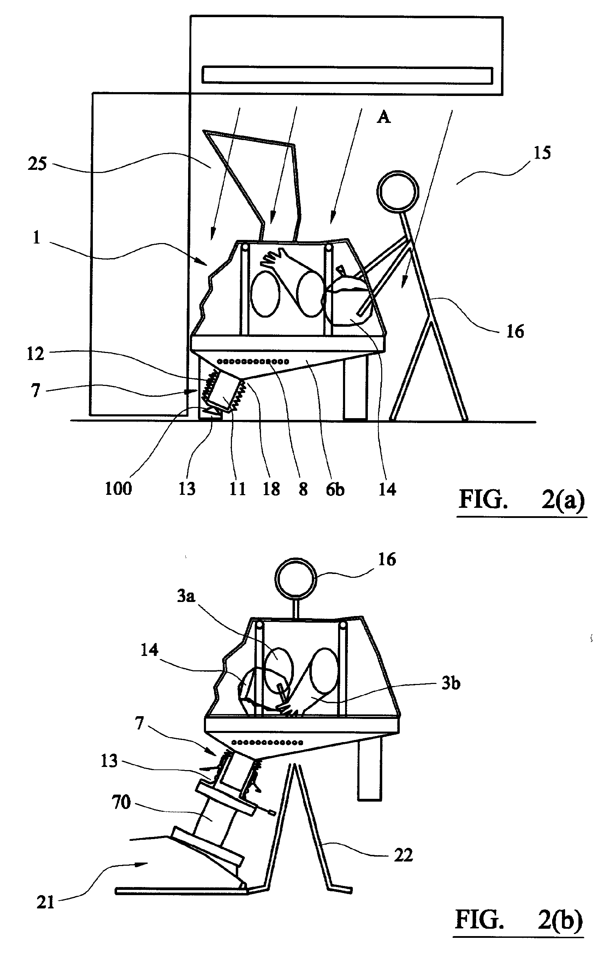

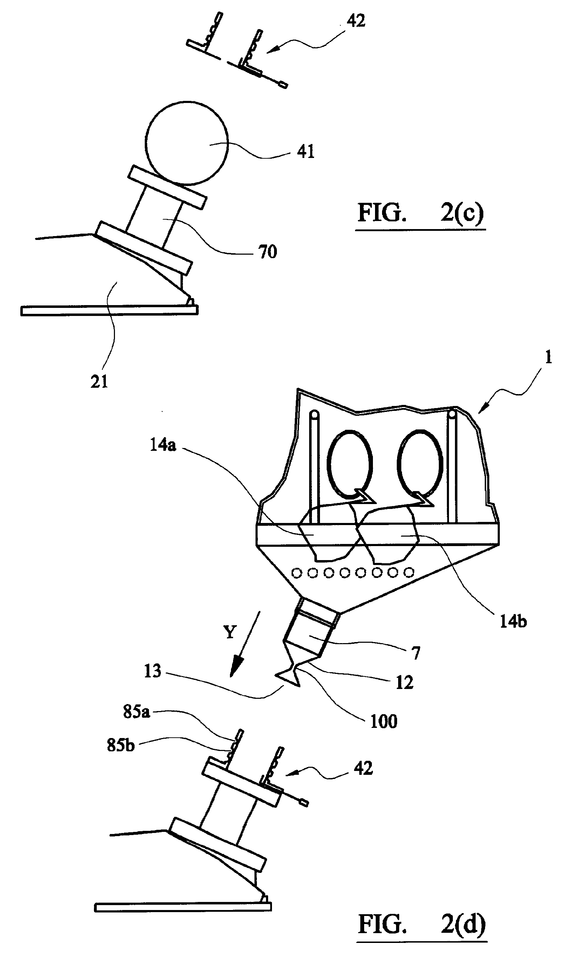

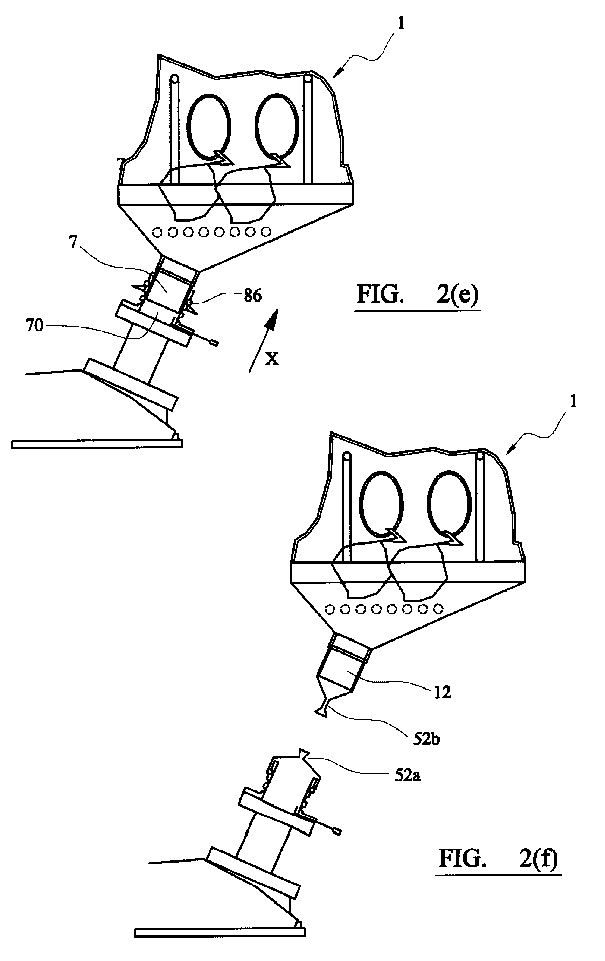

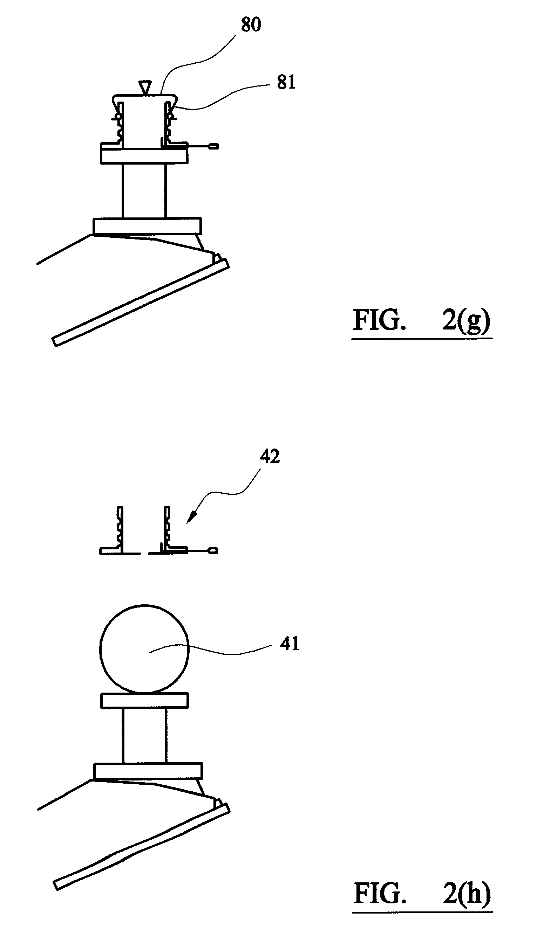

Figure 1 illustrates an embodiment of the material handling enclosure of the invention designated generally by reference 1 and of a size chosen to suit the particular transfer operation. The material handling enclosure 1 comprises a flexible glove bag 2 of approximate cuboidal shape supported by two parallel frame parts 91, 92 of a square U-shape and spaced apart so as to enclose a material handling zone. The frame parts 91, 92 extend from a stainless steel base 6 having a flat working platform 6a in which there is a transfer aperture 77 and beneath which there is a substantially pyramidal body portion 6b (see Figure 2a) incorporating a discharge outlet 7. The transfer aperture 77 is crossed by a plurality of parallel breaker bars or tubes 8 capable of interrupting the fall of a solids bag (not shown) but of admitting solids (*eg* powders). The stainless steel material of the base 6 ensures earthing to disperse static charge. For convenience, the stainless steel base 6 is fitted with four legs 61a-c and 61d (hidden at rear).

An access wall 4 in the glove bag 2 incorporates first and second glove ports 5a, 5b extending into first and second gloves 3a, 3b. Glove 3b is omitted from Figure 1 for clarity. The first and second gloves 3a, 3b permit an operator outside the material handling zone to reach into the material handling zone.

Figures 2a-h illustrate schematically the use of an embodiment of the material transfer apparatus of the invention 1 for transferring a solid into a reactor 21. The material transfer apparatus 1 is loaded with a solids bag 14 by the operator 16 in a conventional containment booth 15 in which down flow of air is indicated by A (Figure 2a). For this purpose the material handling enclosure 1 stands on its four feet 61a-d and the solids bag is delivered through an unzipped lid 25 on the top of the material handling enclosure 1. The solids bag 14 rests on the breaker bars 8. On the exterior surface 11 of the discharge outlet 7 is gathered a first end 18 of a continuous liner 12 of polyethene cut to a suitable length (*eg* 1.5m) from a roll of transparent lay-flat material and tied off with a tie 100 at a second end 13.

The material transfer apparatus 1 is transported to a transfer position adjacent the reactor 21 where it is lifted onto a support stand 22 (Figure 2b) by a fork lift truck. The second end 13 of the continuous liner 12 is sealingly attached to the inlet 70 of the reactor 21 (described in detail below with reference to Figures 2c-h). The operator 16 is able to manipulate gloves 3a, 3b to open the solids bag 14 and release the solid through the transfer aperture 77 and the discharge outlet 7 into the inlet 70 of the reactor 21.

Figures 2c-h illustrate in detail the attachment of the second end 13 of the continuous liner 12 to the inlet 70 of the reactor 21. In a first step (Figure 2c), the lid 41 of the reactor 21 is opened and an adaptor spigot 42 is attached to the inlet 70. The material handling enclosure 1 is moved into the transfer position (see Y in Figure 2d) in which the discharge outlet 7 is docked inside the inlet 70. There is enough liner beyond the tie 100 for the second end 13 of the continuous liner 12 to be attached to the adaptor spigot 42 after which the tie 100 is removed. The adaptor spigot 42 has multiple grooves 85a and 85b on which the second end 13 of the continuous liner 12 is retained with an o-ring 86. The solids bags 14a, 14b are opened and solid released into the reactor 21.

After completion of the transfer operation, the material handling enclosure 1 is moved (in direction X in Figure 2e) to undock the discharge outlet 7 from the inlet 70 leaving the continuous liner 12 intact. The continuous liner 12 is sealed with cable ties 52a, 52b positioned 20 to 50mm apart so that when cut in between the cable ties 52a and 52b, powder escape from the continuous liner 12 is minimised. This leaves the continuous liner 12 and material handling enclosure 1 ready for subsequent operations (Figure 2f). The tail 80 of the detached portion 81 of the continuous liner 12 is decontaminated in a conventional manner (*eg* using a wash solution - Figure 2(g)). Finally the adaptor spigot 42 is removed and the tied end of the severed liner may be discarded. The lid 42 on the reactor 21 may then be closed.

At the end of the transfer operation, the material handling enclosure 1 may be returned to the containment booth 15 for re-loading or for decontamination.

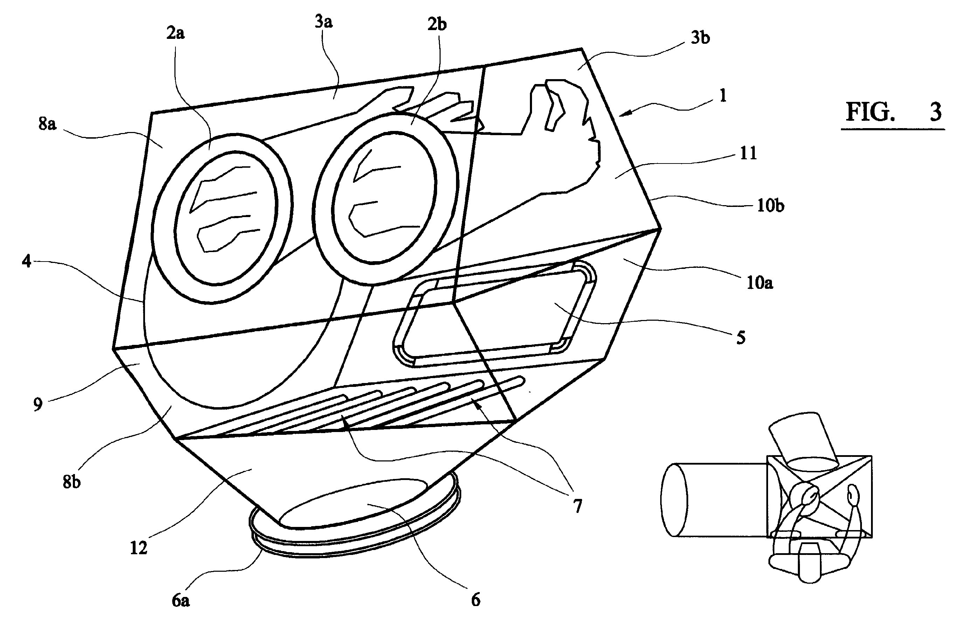

Figure 3 illustrates a second embodiment of the material handling enclosure of the invention designated generally by reference numeral 1. The material handling enclosure 1 adopts an irregular configuration enclosing a material handling zone beyond a front access wall 8a. The access wall 8a incorporates first and second glove ports 2a, 2b which are attached respectively to a first and second glove 3a, 3b. The first and second glove 3a, 3b permit an operator outside the material handling zone to reach into the material handling zone. An irregular hexagonal shaped side wall 9 of the material handling enclosure 1 contains an aperture 4 capable of accommodating the open end of a material storage means such as a powder bin and is opposite an irregular hexagonal shaped side wall 11. A window 5 in the lower of two rear walls 10a, 10b acts as a waste disposal outlet.

The lower wall 12 of the material handling enclosure 1 adopts a truncated pyramidal shape terminating in an aperture 6, the perimeter of which is operatively connected to a powder reactor or other processing vessel via a continuous liner as hereinbefore described. Retaining lip 6a retains the continuous liner at the mouth of the aperture 6. Near to the lower wall of the material handling 1 are mounted a plurality of substantially parallel support bars or tubes 7 capable of interrupting the fall of a powder bag. A lower front wall 8b and an upper wall (hidden in Figure 3) complete the material handling enclosure 1. The upper wall incorporates a glass house or vision panel system for the operator to view the material handling zone.

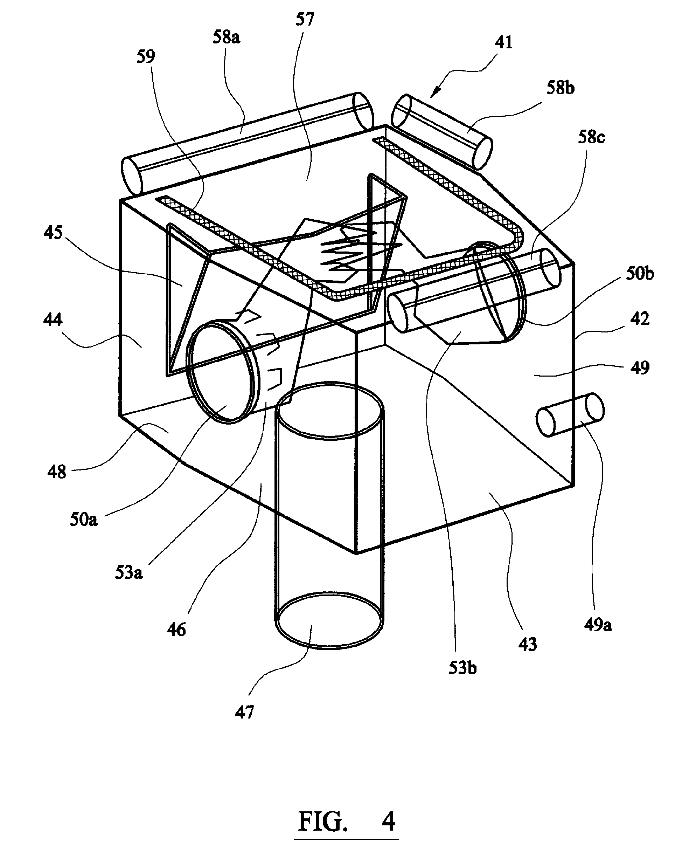

Figure 4 illustrates a third embodiment of the material handling enclosure of the invention designated generally by reference numeral 41 and of a size chosen to suit the particular transfer operation. The material handling enclosure 41 comprises a flexible glove bag 42 of approximate cuboidal shape tapering to a front wall 43 so as to enclose a material handling zone. The flexible glove bag 42 is rigidly held by a framework (omitted for clarity), the frame parts of which are held within tubes 58a, 58b and 58c appropriately positioned at the edges of the flexible glove bag 42. A base 46 which is flexible incorporates a tubular discharge outlet 47. A rear access wall 44 incorporates a pocket 45 capable of admitting four bags containing 1kg of powder. Side walls 48 and 49 in the glove bag 42 incorporate first and second glove ports 50a, 50b extending into first and second gloves 53a, 53b. The first and second gloves 53a, 53b permit an operator outside the material handling zone to reach into the material handling zone. Side wall 49 is provided with a pipe entry point 49a. The upper wall 57 includes a zippered lid 59 to admit material such as solids bags.

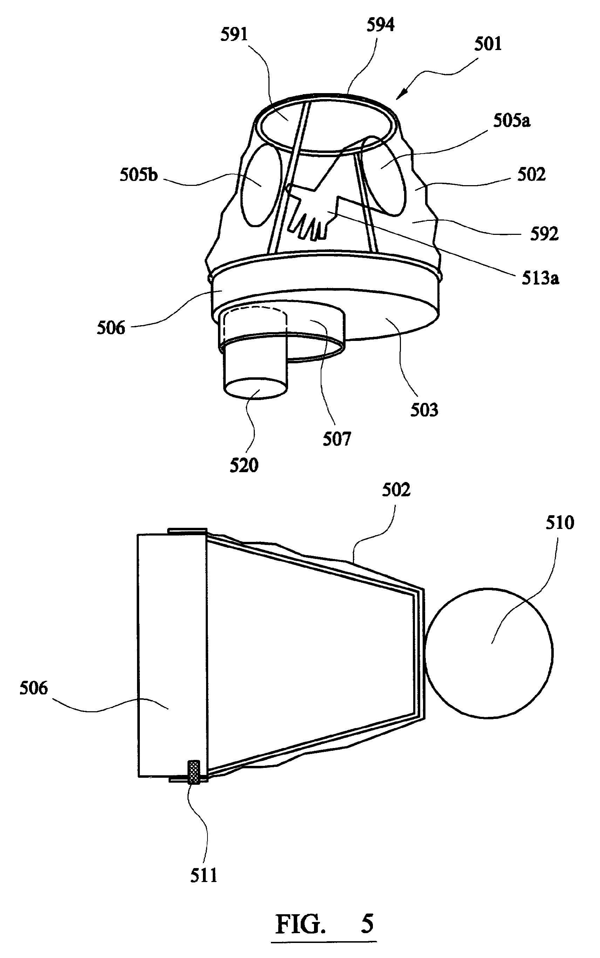

Figure 5 illustrates a fourth embodiment of the material handling enclosure of the invention designated generally by reference numeral 501 and of a size chosen to suit the particular transfer operation. The material handling enclosure 501 comprises a flexible glove bag 502 of an approximate truncated conical shape supported by two elongate frame parts 591, 592 extending from a ring frame part 594. The glove bag 502 attaches via jubilee clips 511 to a stainless steel base 506 incorporating a tubular discharge outlet 507. To the discharge outlet 507 may be attached a continuous liner (as hereinbefore described) for material transfer to a reactor (for example). Within the discharge outlet 507 is a removable powder chute 520. The glove bag 502 incorporates first and second glove ports 505a, 505b extending into first and second gloves 513a, 513b, Glove 513b is omitted from Figure 5 for clarity. The first and second gloves 513a, 513b permit an operator outside the material handling zone to reach into the material handling zone. The upper end of the flexible glove bag 502 supported by ring frame part 594 constitutes a zip open lid 510.

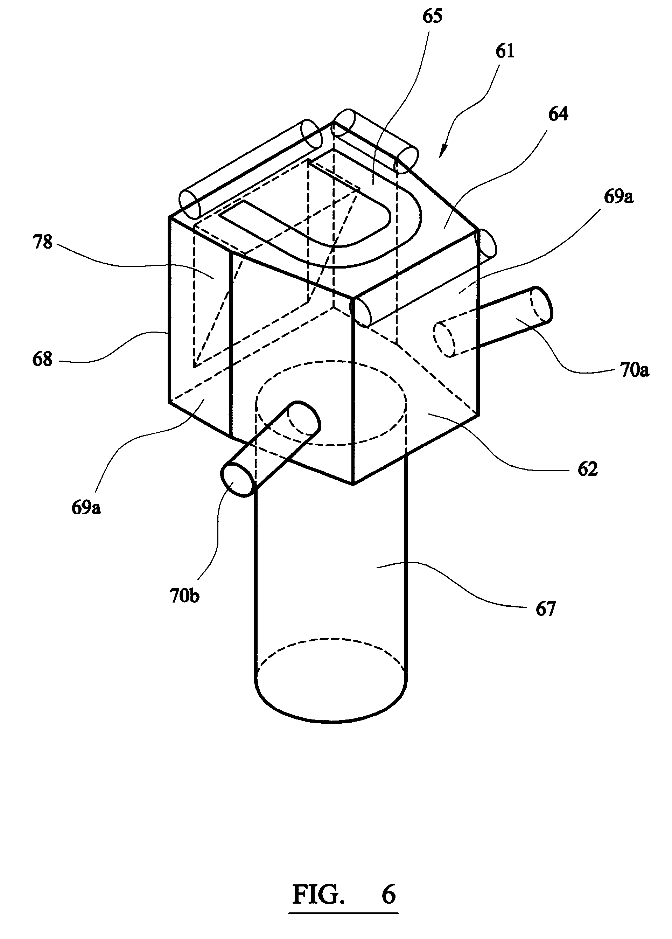

Figure 6 illustrates a fifth embodiment of the material handling enclosure of the invention designated generally by reference 61 and of a size chosen to suit the particular transfer operation. The material handling enclosure 61 comprises a flexible glove bag 62 of approximate cuboidal shape supported by a framework so as to enclose a material handling zone. The base of the glove bag 62 incorporates an integral tubular discharge outlet 67. A wall 64 in the glove bag 62 incorporates a zippered lid 65. Side walls 69a, 69b are each provided with a glove which is omitted from the Figure for the purposes of clarity. The side walls 69a, 69b are also each provided with a pipe entry point 70a, 70b. A rear access wall 68 incorporates a pocket 78.

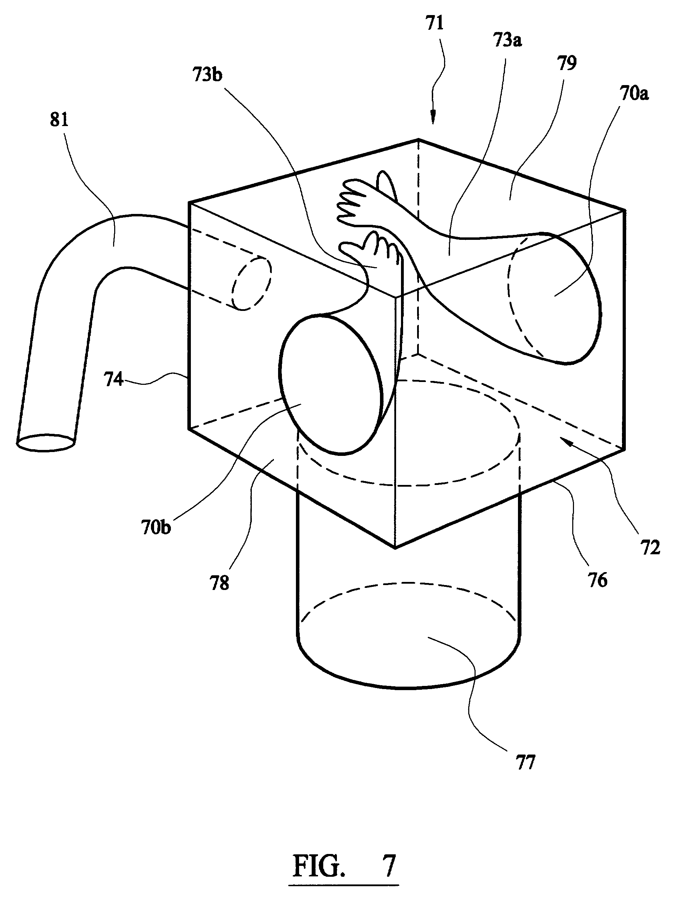

Figure 7 illustrates a sixth embodiment of the material handling enclosure of the invention designated generally by reference numeral 71 and of a size chosen to suit the particular transfer operation. The material handling enclosure 71 comprises a flexible glove bag 72 of approximate cuboidal shape enclosing a material handling zone. The flexible glove bag 72 is held by a framework of elasticated cords (details omitted for clarity) under tension. A base 76 which is flexible incorporates a connection sleeve 77 into which may be inserted the upper part of a powder drum (not shown). A rear wall 74 incorporates a discharge outlet 81 which may be attached to a recovery tube (not shown). An axially compressible tubular sleeve may be used in the transfer of material from a powder drum to the flexible glove bag 72 via the connection sleeve 77 and in the transfer of material from the flexible glove bag 72 to the recovery tube via the discharge outlet 81. Side walls 78 and 79 in the glove bag 72 incorporate first and second glove ports 70a, 70b extending into first and second gloves 73a, 73b. The first and second gloves 73a, 73b permit an operator outside the material handling zone to reach into the material handling zone.

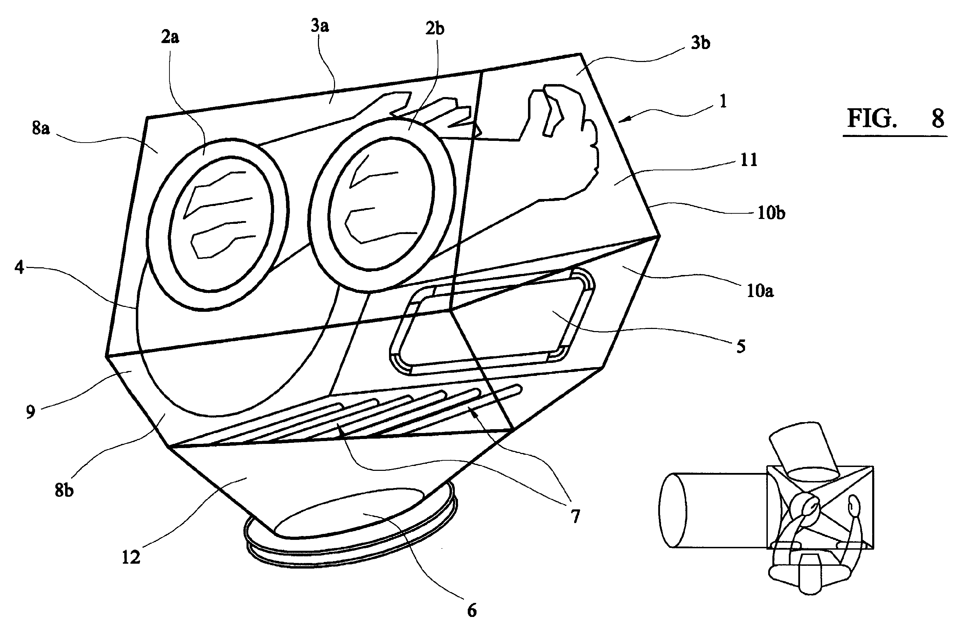

Figure 8 illustrates a sixth embodiment of the material handling enclosure of the invention designated generally by reference 1. The material handling enclosure 1 is a walled enclosure which adopts an irregular configuration enclosing a material handling zone beyond a front access wall 8a. The access wall 8a incorporates first and second glove ports 2a, 2b which are attached respectively to a first and second glove 3a, 3b. The first and second glove 3a, 3b permit an operator outside the material handling zone to reach into the material handling zone. An irregular hexagonal shaped side wall 9 of the walled enclosure 1 contains an entrance 4 capable of accommodating the open end of a material storage means such as a powder bin and is opposite an irregular hexagonal shaped side wall 11. The perimeter of the entrance 4 is adapted to sealingly attach to the first end of a concertina sleeve as described below. A window 5 in the lower of two rear walls 10a, 10b acts as a waste disposal outlet.

The lower wall 12 of the walled enclosure 1 adopts a truncated pyramidal shape terminating in an aperture 6, the perimeter of which is operatively connected to a powder reactor or other processing vessel. Near to the lower wall of the enclosure device 1 are mounted a plurality of substantially parallel support bars or tubes 7 capable of interrupting the fall of a powder bag. A lower front wall 8b and an upper wall (hidden in Figure 8) complete the walled enclosure 1. The upper wall incorporates a glass house or vision panel system for the operator to view the material handling zone.

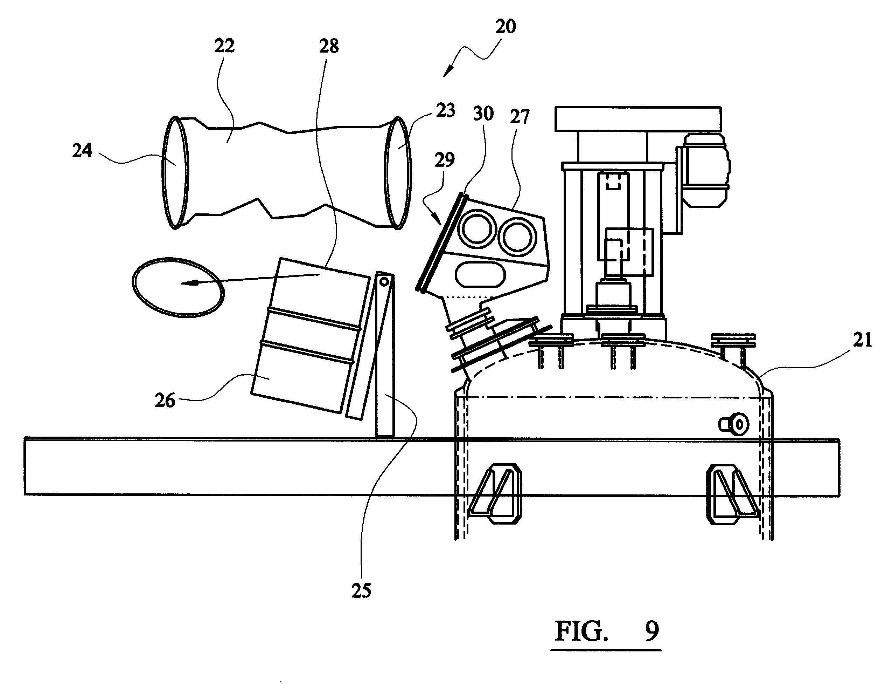

Figure 9 illustrates schematically the disassembled component parts of an embodiment of the material transfer apparatus of the invention designated generally by reference numeral 20. The material transfer apparatus 20 comprises a concertina sleeve 22 cut to a suitable length from a roll of transparent lay-flat material and having a first end 24 and a second end 23, a drum tipper 25 loaded with a drum 26 containing the material and a walled enclosure 27 (as defined in Figure 8) mounted on a reactor 21 and having an entrance 29 at the perimeter of which is a multi groove spigot 30.

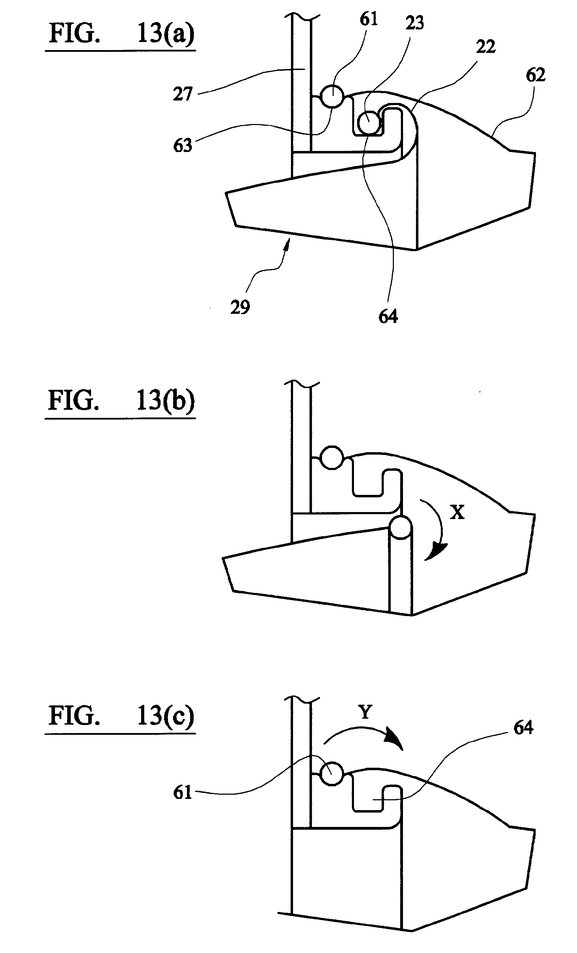

In a first stage of the material transfer process (Figure 9), the drum 26 and drum tipper 25 are positioned near to the enclosure 27, the end 28 of the drum 26 is opened and the drum 26 is loaded onto the drum tipper 25. The first end 24 of the concertina sleeve 22 is taped to the open end 28 of the drum 26 to form a dust tight seal. Proprietary adhesive tape may be used for this purpose. The second end 23 of the concertina sleeve 22 is sealingly attached to a groove in the multi groove spigot 30 surrounding the entrance 29 of the walled enclosure 27 (described in detail below with reference to Figure 13).

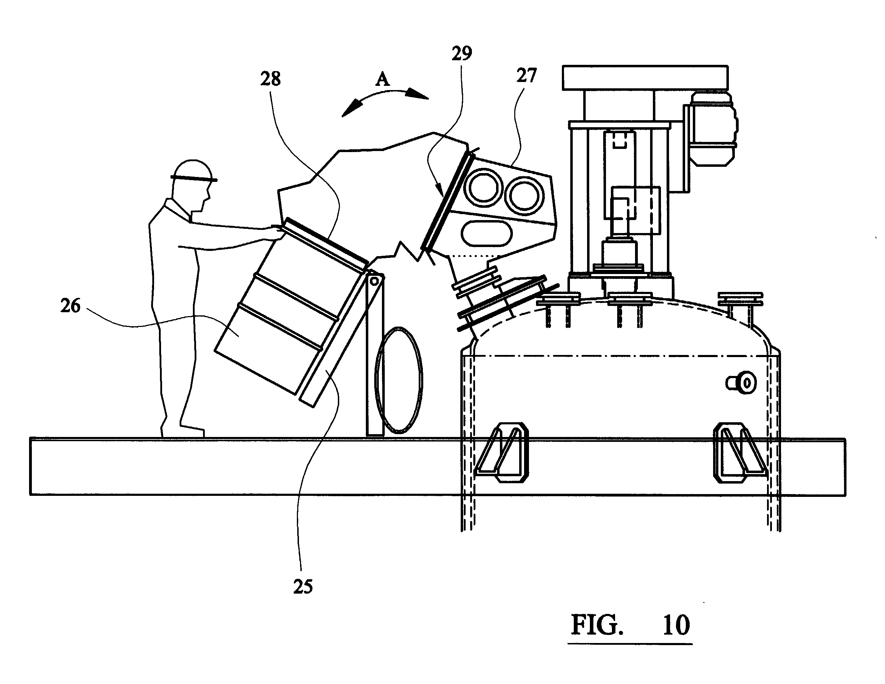

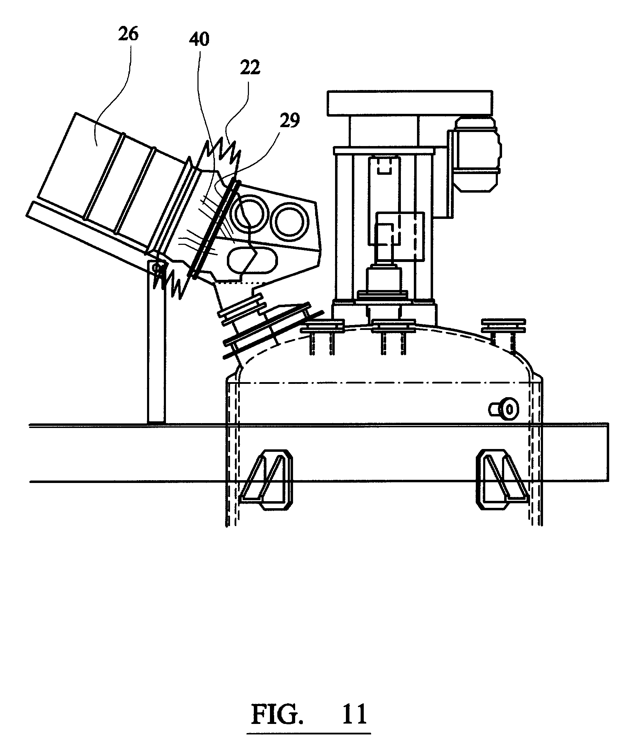

As shown in Figure 10, the drum tipper 25 is actuated to tip the open end 28 of the drum 26 towards the entrance 29 in the enclosure 27. To assist this movement, the concertina sleeve 22 is compressed along its length and undergoes radial flexature (as illustrated by arrow A). The drum 26 adopts a suitable transfer position (Figure 11) in which a drum liner 40 containing the material slides out of the drum 26, through the concertina sleeve 22, through the entrance 29 and into the walled enclosure 27. The drum liner 40 rests on the bars or tubes (see 7 in Figure 1) near to the lower wall of the enclosure 27.

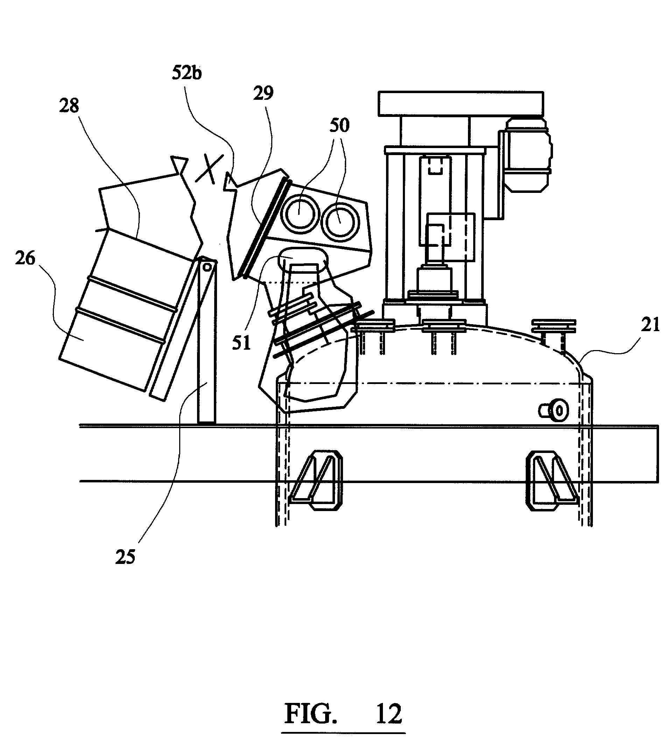

Using the gloves 50 (see Figure 12), the operator opens and shakes the drum liner 40 to release the material into the reactor 21. Once fully evacuated, the operator passes the spent drum liner through a waste disposal outlet 51. The drum tipper 25 may be actuated to move the drum 26 away from the walled enclosure 27 and the concertina sleeve 22 may be sealed with cable ties 52a, 52b positioned 20 to 50mm apart (at a point near to the end 28 of the drum 26) so that when cut in between the cable ties 52a and 52b, powder escape from the concertina sleeve 22 is minimised. If the length of the concertina tube 22 so dictates, the tying and cutting procedure may be repeated near to the entrance 29 of the enclosure 27.

The material of a second drum may subsequently undergo essentially the same steps of material transfer with a modified first stage. In the modified first stage (see Figure 13), the second end 61 of a concertina sleeve 62 is sealingly attached to an upper groove 63 in the multi groove spigot surrounding the entrance 29 of the enclosure 27. The first end 23 of the tied portion of the concertina sleeve 22 is dislodged from a lower groove 64 by the operator using the gloves (see X in Figure 6(b)) and passed into the waste disposal outlet. The second end 61 of the concertina sleeve 62 may then (if desired) be moved down to the lower groove 64 (see Y in Figure 6(c)).

The process may be repeated with any number of subsequent drums until the desired amount of material has been transferred into the reactor.

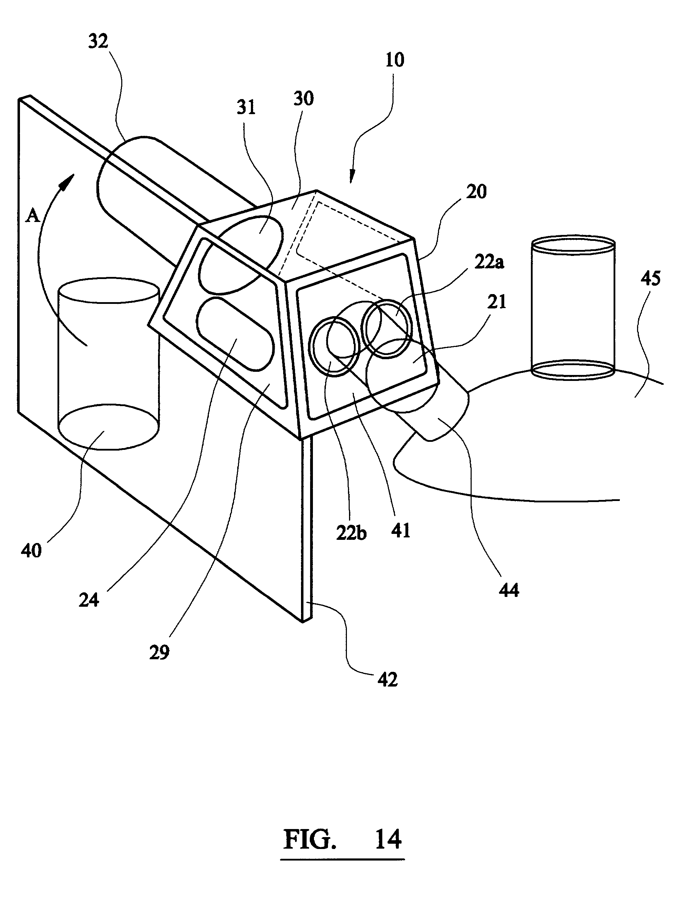

Figure 14 illustrates an embodiment of the material transfer apparatus of the invention designated generally by reference numeral 10. The material transfer apparatus 10 comprises a walled enclosure 20 adopting a truncated square pyramidal configuration enclosing a material handling zone beyond a front access wall 21 and a drum 40 containing powder. The front access wall 21 incorporates first and second glove ports 22a, 22b which are attached respectively to a first and second glove (not shown). A side wall 29 of the walled enclosure 20 contains an aperture 24 serving as a waste disposal outlet. A rear wall 30 of the walled enclosure 20 incorporates an aperture 31. The perimeter of the aperture 31 is adapted to sealingly attached to the second end of a continuous sleeve 32 of lay flat material. The continuous sleeve 32 is illustrated in inflated form which helps the transfer operation. A screen 42 provides the operator with a physical barrier from the drum 40.

During a transfer operation, the drum 40 is inverted in direction A by a drum tipper (not shown) towards the first end of the inflated continuous sleeve 32 to which it is then attached. Powder is transferred into the walled enclosure 20 from where an operator is able to manipulate the gloves whilst advantageously standing face on to the tipped drum. The base 41 of the walled enclosure 20 tapers into an angled powder chute 44 which is operatively connected a material receiving means 45 such as a reactor.

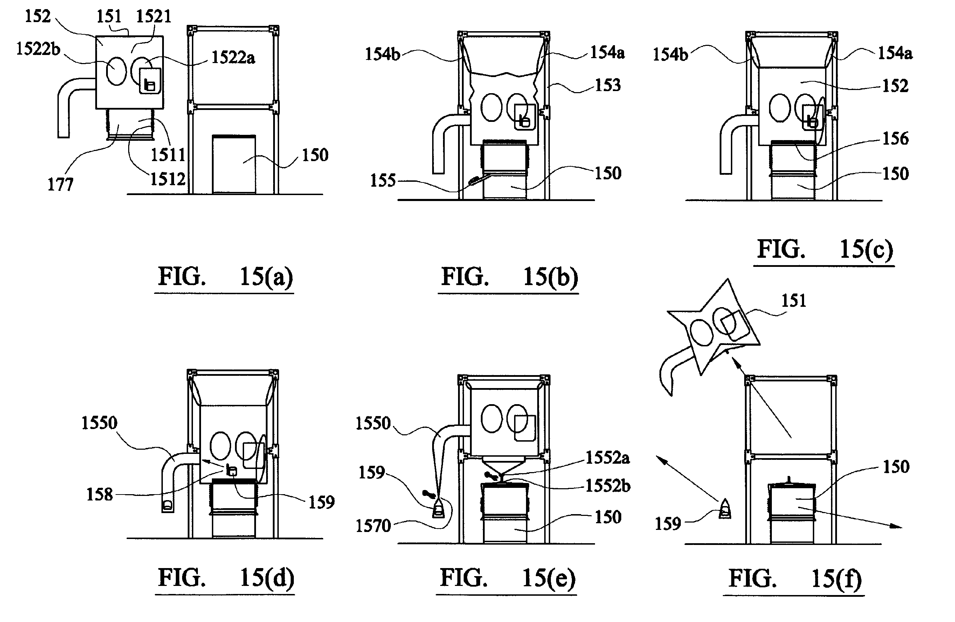

Figures 15a-f illustrate schematically a transfer operation carried out in an embodiment of the material transfer apparatus of the invention. In this embodiment, the material handling enclosure 151 comprises a flexible glove bag 152 capable of adopting an approximate cuboidal shape enclosing a material handling zone. A front access wall 1521 incorporates first and second glove ports 1522a, 1522b and the flexible glove bag is provided with an integral discharge outlet 1550. A base of the material handling enclosure 151 incorporates a connection sleeve 177 into which may be inserted the upper part of a powder drum 150 (as in Figure 15b). On the exterior surface 1511 of the connection sleeve 177 is gathered a first end of a continuous liner 1512 of polyethene cut to a suitable length from a roll of transparent lay-flat material.

From the preparatory position (Figure 15a), the flexible glove bag 152 is suspended loosely from a framework 153 (Figure 15b) by elasticated cords 154a, 154b. A second end of the continuous liner 1512 is taped to the open end of the powder drum 150 to form a dust tight seal. Proprietary adhesive tape 155 may be used for this purpose. The flexible glove bag152 is tensioned by the elasticated cords 154a, 154b and inspected for leaks (Figure 15c). The lid 156 of the drum 150 is removed.

A spatula 158 is used to recover sample into a material container 159 which is then delivered into the discharge outlet 1550 on the flexible glove bag 152 (Figure 15d). A clean off procedure is begun and the lid 156 of the drum 150 is replaced. The continuous liner 1512 is sealed with cable ties 1552a, 1552b positioned 20 to 50mm apart (at a point near to the end of the drum 150) so that when cut in between the cable ties 1552a and 1552b, powder escape from the continuous liner 1512 is minimised (Figure 15e). The discharge outlet 1550 is sealed with a cable tie 1570 and cut to release the sample in the material container 159. Finally the flexible glove bag 152 is vacuum flattened and incinerated, the drum 150 returned to store and the sample 159 sent to a laboratory or reactor as desired (Figure 15f).

## Claims

1. A material transfer apparatus for the transfer of material between a material storage means and a material receiving means, said material transfer apparatus comprising:
a material handling enclosure positionable in a transfer position so as to enclose a material handling zone beyond an access wall thereof, said access wall being adapted or adaptable to permit an operator outside the material handling zone to reach into the material handling zone, said material handling enclosure having a discharge outlet and an entrance; and either or both of
a first axially compressible tubular sleeve for localised containment of extraneous material at and in the vicinity of the interface between the material handling enclosure and the material storage means, said first axially compressible tubular sleeve being flexible about a radial axis and having a first end and a second end attachable at or near to the mouth of the entrance of the material handling enclosure to form a substantially dust tight seal; and
a second axially compressible tubular sleeve for localised containment of extraneous material at and in the vicinity of the interface between the material receiving means and the material handling enclosure, said second axially compressible tubular sleeve being flexible about a radial axis and having a first end attachable at or near to the mouth of the discharge outlet of the material handling enclosure to form a substantially dust tight seal and a second end attachable at or near to the mouth of an inlet of the material receiving means to form a substantially dust tight seal.

2. A material transfer apparatus as claimed in claim 1 wherein the mouth of the entrance is a connection sleeve to which is attached the second end of the first axially compressible tubular sleeve to form a substantially dust tight seal.

3. A material transfer apparatus as claimed in claim 2 wherein the connection sleeve is an elongate tubular member on an exterior surface of which is mounted the second end of the first axially compressible tubular sleeve in a substantially dust tight manner.

4. A material transfer apparatus as claimed in any preceding claim wherein the discharge outlet is an elongate tubular member on an exterior surface of which is mounted the first end of the second axially compressible tubular sleeve in a substantially dust tight manner.

5. A material transfer apparatus as claimed in claim 4 further comprising a removable chute substantially concentrically disposed within the discharge outlet.

6. A material transfer apparatus as claimed in any preceding claim wherein the inlet of the material receiving means is an elongate tubular member and the second end of the second axially compressible tubular sleeve is mounted on an exterior surface thereof, wherein the discharge outlet is of a narrower diameter than the inlet so as to be insertable therein.

7. A material transfer apparatus as claimed in any preceding claim wherein the axially compressible tubular sleeve is axially collapsible.

8. A material transfer apparatus as claimed in claim 7 wherein the axially compressible tubular sleeve is a concertina tube.

9. A material transfer apparatus as claimed in claim 7 or 8 wherein the axially compressible tubular sleeve is radially compressible.

10. A material transfer apparatus as claimed in any preceding claim wherein the axially compressible tubular sleeve is composed of a lay flat material.

11. A material transfer apparatus as claimed in any preceding claim wherein the axially compressible tubular sleeve is adapted to be inflatable.

12. A material transfer apparatus as claimed in any preceding claim wherein the axially compressible tubular sleeve is a continuous liner.

13. A material transfer apparatus as claimed in claim 12 wherein at least a part of the continuous liner is gathered at or near to the mouth of the discharge outlet.

14. A material transfer apparatus as claimed in any preceding claim wherein the axially compressible tubular sleeve is adapted to be tied and severed.

15. A material transfer apparatus as claimed in any preceding claim wherein the material handling enclosure comprises a rigid base which incorporates the discharge outlet.

16. A material transfer apparatus as claimed in claim 15 wherein the rigid base is adapted to provide a working platform.

17. A material transfer apparatus as claimed in claim 15 or 16 comprising a substantially flat working platform beneath which is an inwardly tapering cavity tapering into the mouth of the discharge outlet so as to assist the transfer of material into the discharge outlet.

18. A material transfer apparatus as claimed in claim 17 wherein the inwardly tapering cavity is defined by a frustoconical, truncated pyramidal or substantially pyramidal body portion tapering into the mouth of the discharge outlet.

19. A material transfer apparatus as claimed in any of claims 15 to 18 wherein the rigid base is composed of stainless steel.

20. A material transfer apparatus as claimed in any preceding claim wherein the material handling enclosure comprises an internal support means for interrupting transfer of material in a material container to the material receiving means.

21. A material transfer apparatus as claimed in claim 20 wherein the internal support means is a plurality of bars or tubes or a mesh, said bars or tubes being sufficiently spaced apart to withstand passage of a material container but to facilitate passage of material.

22. A material transfer apparatus as claimed in any preceding claim wherein the material handling enclosure is a framework structure comprising a plurality of rigid frame parts.

23. A material transfer apparatus as claimed in claim 22 wherein the plurality of frame parts support an envelope of flexible material.

24. A material transfer apparatus as claimed in any of claims I to 21 wherein the material handling enclosure is composed of flexible material adapted to be suspended from an external support.

25. A material transfer apparatus as claimed in claim 24 wherein the flexible material is elasticated.

26. A material transfer apparatus as claimed in claim 24 or 25 wherein the flexible material includes elasticated cords or hangers, whereby the flexible material or a part thereof is erected by tensioning the elasticated cords suspended from the external support.

27. A material transfer apparatus as claimed in any of claims 1 to 21 wherein the material handling enclosure is composed of rigid material.

28. A material transfer apparatus as claimed in any preceding claim wherein the material handling enclosure adopts a substantially cuboidal configuration having a first side wall and a second side wall connected by a rear wall, a front wall and an upper wall, wherein the front wall is the access wall being adapted or adaptable to permit an operator outside the material handling zone to reach into the material handling zone or the first and/or second side walls is an access wall being adapted or adaptable to permit an operator outside the material handling zone to reach into the material handling zone.

29. A material transfer apparatus as claimed in any of claims 1 to 27 wherein the material handling enclosure adopts a truncated substantially cone-like configuration having a side wall connected to an upper wall, wherein the side wall is the access wall being adapted or adaptable to permit an operator outside the material handling zone to reach into the material handling zone.

30. A material transfer apparatus as claimed in any of claims 1 to 27 wherein the material handling enclosure adopts an irregular configuration having a first side wall and a second side wall being an irregular hexagonal shape, the first side wall and second side wall being connected by two rear walls, two front walls and an upper wall, wherein the front wall is the access wall being adapted or adaptable to permit an operator outside the material handling zone to reach into the material handling zone or the first and/or second side wall is an access wall being adapted or adaptable to permit an operator outside the material handling zone to reach into the material handling zone.

31. A material transfer apparatus as claimed in any preceding claim wherein the access wall comprises one (or more than one) flexible portion in the shape of a glove (or one (or more than one) flexible portion capable of being deformed into the shape of a glove) which permits an operator outside the material handling zone to reach into the material handling zone.

32. A material handling enclosure as defined in any preceding claim.

33. An axially compressible tubular sleeve as defined in any of claims 1 to 31.

34. A method for transferring material to a material receiving means having an inlet, said method comprising:
(A) positioning a material handling enclosure on or adjacent to the material receiving means in a transfer position so as to enclose a material handling zone beyond an access portion thereof, said access portion being adapted or adaptable to permit an operator outside the material handling zone to reach into the material handling zone, said material handling enclosure having a discharge outlet and a connection sleeve;
(B) connecting a first end of an axially compressible tubular sleeve as defined in any of claims 1 to 27 to the discharge outlet in a substantially dust tight manner;
(C) connecting a second end of the axially compressible tubular sleeve to the inlet in a substantially dust tight manner;
(D) reaching into the material handling zone and accessing the material by manipulating said access portion;
(E) transferring the material from the material handling zone through the discharge outlet into the inlet of the material receiving means;
(F) closing said axially compressible tubular sleeve from the discharge outlet; and
(G) disconnecting said axially compressible tubular sleeve from the discharge outlet.

35. A method as claimed in claim 34 wherein the material handling enclosure is as defined in any of claims 1 to 32.

36. A method as claimed in claim 34 or 35 wherein the axially compressible tubular sleeve is a continuous liner gathered at or near to the mouth of the discharge outlet and step (C) of the method comprises:
(C1) drawing off a portion of the continuous liner;
(C2) connecting the portion of the continuous liner to the inlet in a substantially dust tight manner;
step (F) of the method comprises:
(F1) closing said portion of the continuous liner from the discharge outlet; and
step (G) of the method comprises:
(G1) disconnecting said portion of the continuous liner from the discharge outlet.

37. A method as claimed in claim 36 wherein step (F1) comprises: tying off said portion of the continuous liner from the discharge outlet; and step (G1) comprises:
severing said portion of the continuous liner from the remainder of the continuous liner gathered at or near to the mouth of the discharge outlet.

38. A method as claimed in claim 37 wherein step (F1) comprises: tying off said portion of the continuous liner from the discharge outlet with a first tie and a second tie; and step (G1) comprises: severing said portion of the continuous liner between the first tie and the second tie.

39. A method as claimed in any of claims 34 to 38 wherein step (B) further comprises:
(B1) inserting the discharge outlet into the inlet, wherein each of the inlet and discharge outlet is an elongate member and the discharge outlet is of narrower diameter than the inlet.

40. A method as claimed in any of claims 34 to 39 wherein step (A) further comprises:
(A1a) connecting a first end of an axially compressible tubular sleeve to the connection sleeve of the material handling enclosure in a substantially dust tight manner;
(A1b) connecting a second end of the axially compressible tubular sleeve to a material storage means in a substantially dust tight manner; and
(A1c) introducing material into the material handling enclosure in a contained manner.

41. A method as claimed in claim 40 wherein the axially compressible tubular sleeve is a second continuous liner gathered at or near to the mouth of the connection sleeve and step (A1a) of the method comprises:
(A1a1) drawing off a portion of the second continuous liner;
(A1a2) connecting the portion of the second continuous liner to the material storage means in a substantially dust tight manner; and the method further comprises:
(H) closing said portion of the second continuous liner from the connection sleeve; and
(I) disconnecting said portion of the second continuous liner from the connection sleeve.

42. A method as claimed in claim 41 wherein step (H) comprises: tying off said portion of the second continuous liner from the connection sleeve with a first tie and a second tie; and step (I) comprises: severing said portion of the second continuous liner between the first tie and the second tie.
